# EUROPEAN PATENT SPECIFICATION

(11) **EP 4 653 145 B1**
(45) Date of publication and mention of the grant of the patent: **05.08.2026**
(21) Application number: 25171132.1
(22) Date of filing: 17.04.2025
(51) Int. Cl.: B25F 5/00, H02J 7/00, H02P 6/08

(54) **POWER TOOL**
ELEKTROWERKZEUG
OUTIL ÉLECTRIQUE

(30) Priority: 24.05.2024 CN 202410661167; 24.05.2024 CN 202410660223
(43) Date of publication of application: 26.11.2025
(73) Proprietor: Nanjing Chervon Industry Co., Ltd., Nanjing, Jiangsu 211106 (CN)
(72) Inventor: LI, Tengyue, Nanjing, Jiangsu Province 211106 (CN); TONG, Wenkang, Nanjing, Jiangsu Province 211106 (CN); LIU, Haoyue, Nanjing, Jiangsu Province 211106 (CN); ZHANG, Weiwei, Nanjing, Jiangsu Province 211106 (CN)
(74) Representative: Sun, Yiming

(56) References cited:
- EP-A1- 3 806 273
- EP-A2- 2 505 316
- EP-A2- 2 853 353

## Description

### TECHNICAL FIELD

The present application relates to the technical field of tools and, in particular, to a power tool and a cutting tool.

### BACKGROUND

After a power tool is started, the power tool constantly runs at the maximum rotational speed. In this manner, the power tool consumes excessive energy when unloaded. Moreover, for example, when a cutting tool rotates at an excessively high speed, it is unfavorable for a user to align blades. Therefore, the user expects that the cutting tool works at a relatively low rotational speed when the cutting tool starts cutting and then works at a relatively high rotational speed after the user starts pressing hard. This function is generally referred to as an AUTO SENSE function.

At present, the rotational speed of an electric motor of the power tool or the change of a current is generally used as a determination condition for activating the AUTO SENSE function, and a determination threshold is set based on this. However, a parameter of a battery pack of the power tool may change during the use of the power tool, which probably reduces the sensitivity of the determination threshold. A power tool of European Patent Application EP3806273A1, disclosing the preamble of claim 1, comprises a controller controlling an amount of electric current drawn from the battery pack according to an identification of a type of battery pack. The European Patent Application EP2505316A2 relates to the control of the acceleration rate of the motor depending on a battery property. The European Patent Application EP2853353A2 discloses a control of a duty ratio of the PWM control signal according to a detection signal which can be a battery current or voltage, without a threshold being updated according to a running paramter of the electric motor.

This part provides background information related to the present application, and the background information is not necessarily the existing art.

### SUMMARY

An object of the present application is to solve or at least alleviate part or all of the preceding problems. Therefore, an objective of the present application is to provide a power tool and a cutting tool with an AUTO SENSE determination threshold that has relatively high stability.

To achieve the preceding object, the present application adopts the technical solutions below.

A power tool includes: an electric motor; a battery mounting portion adaptable to multiple types of battery packs; and a control circuit configured to control the electric motor to run. The control circuit includes at least a controller configured to, in the case where an electric motor parameter of the electric motor exceeds a parameter threshold, control the electric motor to rotate on an accelerated basis. The controller is configured to acquire a battery parameter of a battery pack and adjust the parameter threshold according to the battery parameter.

In some examples, the battery parameter includes at least one of an electric quantity and a capacity.

In some examples, parameter thresholds adjusted according to different battery parameters correspond to different acceleration curves of the electric motor rotating on an accelerated basis.

In some examples, the controller is configured to, before the electric motor starts to run, adjust the parameter threshold according to the battery parameter.

In some examples, the controller is configured to adjust the parameter threshold according to the battery parameter at least in the process where the electric motor runs with no load.

According to the invention, the power tool includes a parameter detection device, where the parameter detection device is electrically connected to the battery pack and is configured to detect the battery parameter of the battery pack and transmit the battery parameter to the controller.

In some examples, the power tool further includes a data acquisition device configured to receive a user input, where the controller is configured to adjust the parameter threshold according to the user input and/or the battery parameter.

In some examples, the data acquisition device has at least two gear selection modes.

In some examples, the electric motor parameter includes a current or a demagnetization time during the commutation of the electric motor.

In some examples, the parameter threshold is inversely related to the battery parameter substantially.

In some examples, the controller is configured to control, in response to a power-on signal, the electric motor to rotate at a first rotational speed constantly.

According to the invention, the parameter detection device is further configured to detect a running parameter of the electric motor and transmit the running parameter of the electric motor to the controller.

According to the invention, the controller is configured to adjust the parameter threshold to the updated parameter threshold according to a running parameter of the electric motor in a phase where the electric motor runs with no load. In some examples, the controller is configured to adjust the parameter threshold to update the parameter threshold according to the battery parameter.

In some examples, the controller replaces a historical parameter threshold with the updated parameter threshold.

In some examples, the controller is configured to, in the case where the electric motor parameter exceeds the updated parameter threshold, control the electric motor to rotate on an accelerated basis.

In some examples, a cutting tool includes: an electric motor; a cutting assembly including at least a cutting member for cutting a workpiece; a battery mounting portion adaptable to at least one type of battery pack; and a control circuit configured to control the electric motor to run. The control circuit includes at least a controller configured to, in the case where an electric motor parameter of the electric motor exceeds a parameter threshold, control the electric motor to rotate on an accelerated basis. The controller is configured to acquire a battery parameter of a battery pack and adjust the parameter threshold according to the battery parameter. The parameter threshold is inversely related to the battery parameter substantially.

In some examples, a power tool includes: an electric motor; a battery mounting portion adaptable to at least one type of battery pack; a data acquisition device configured to receive a user input; and a control circuit configured to control the electric motor to run. The control circuit includes at least a controller configured to, in the case where an electric motor parameter of the electric motor exceeds a parameter threshold, control the electric motor to rotate on an accelerated basis. The controller is configured to adjust the parameter threshold according to the user input.

In some examples, the controller is configured to, before the electric motor starts to run, adjust the parameter threshold according to the user input.

In some examples, the controller is configured to adjust the parameter threshold according to the user input at least in the process where the electric motor runs with no load.

In some examples, the data acquisition device has at least two gear selection modes.

In some examples, in the case where the electric motor works in a gear corresponding to the data acquisition device, the controller is configured not to respond to the user input.

In some examples, the data acquisition device includes an Internet of Things module, and the Internet of Things module is configured to perform wireless communication with an external terminal to acquire a user input sent by the external terminal.

In some examples, the data acquisition device includes a gear shift knob.

In some examples, speed change curves of the electric motor rotating on an accelerated basis in different gears are different.

The present application has the benefit described below. The parameter threshold is adjusted according to the battery parameter. In addition, after the electric motor parameter exceeds the parameter threshold, the electric motor is controlled to rotate on an accelerated basis, thus activating an AUTO SENSE function. The battery parameter is considered so that the stability of the AUTO SENSE determination threshold is improved.

### BRIEF DESCRIPTION OF DRAWINGS

FIG. 1 is a perspective view of a reciprocating saw in an example;
FIG. 2 is a side view of the inside of the reciprocating saw in FIG. 1;
FIG. 3 is a circuit block diagram of a reciprocating saw in an example;
FIG. 4 is a flowchart of a method for a controller to adjust a parameter threshold according to a battery parameter of a battery pack and control an electric motor to activate an AUTO SENSE function in an example;
FIG. 5 is a flowchart of a method for a controller to adjust a parameter threshold according to a user input and control an electric motor to activate an AUTO SENSE function in an example;
FIG. 6 is a flowchart of a method for a controller to update a parameter threshold according to the average value of a demagnetization time and control an electric motor to activate an AUTO SENSE function in an example;
FIG. 7 is a flowchart of a method in another implementation in which a controller updates a parameter threshold according to the average value of a demagnetization time and controls an electric motor to activate an AUTO SENSE function in an example; and
FIG. 8 is a graph showing the relationship between a trigger stroke and the rotational speed of an electric motor in an example.

### DETAILED DESCRIPTION

In the present application, the terms "comprising", "including", "having", or any other variation thereof are intended to cover an inclusive inclusion such that a process, method, article, or device comprising a series of elements includes not only those series of elements, but also other elements not expressly listed, or elements inherent in the process, method, article, or device. Without further limitations, an element defined by the phrase "comprising a..." does not preclude the presence of additional identical elements in the process, method, article, or device comprising that element.

In the present application, the term "and/or" is used for describing the association relationship between associated objects, which means that there can be three kinds of relationships. For example, A and/or B may indicate that A exists alone, A and B exist simultaneously, and B exists alone. In addition, the character "/" in the present application generally indicates the "and/or" relationship between the contextual associated objects.

In the present application, the terms "connection", "combination", "coupling", and "mounting" may be a direct connection, combination, coupling, or mounting and may also be an indirect connection, combination, coupling, or mounting. For example, a direct connection means that two members or assemblies are connected together without intermediate members, and an indirect connection means that two members or assemblies are separately connected to at least one intermediate member and the two members or assemblies are connected to each other through the at least one intermediate member. In addition, "connection" and "coupling" are not limited to physical or mechanical connections or couplings and may include electrical connections or couplings.

In the present application, it is to be understood by those of ordinary skill in the art that a relative term (such as "about", "approximately", and "substantially") used in conjunction with a quantity or a condition includes a stated value and has a meaning dictated by the context. For example, the relative term includes at least a degree of error associated with the measurement of a particular value, a tolerance caused by manufacturing, assembly, and use associated with the particular value, and the like. Such a relative term should also be considered as disclosing the range defined by the absolute values of the two endpoints. The relative term may refer to that an indicated value is added or reduced by a certain percentage (such as 1%, 5%, 10%, or more). A value not modified by the relative term should also be disclosed as a particular value with a tolerance. In addition, when expressing a relative angular position relationship (for example, substantially parallel or substantially perpendicular), "substantially" may refer to that a certain degree (such as 1 degree, 5 degrees, 10 degrees, or more) is added to or subtracted from the indicated angle.

In the present application, it is to be understood by those of ordinary skill in the art that the function implemented by an assembly may be implemented by one assembly, multiple assemblies, one part, or multiple parts. Similarly, a function implemented by a part may be implemented by one part, one assembly, or a combination of parts.

In the present application, the terms "up", "down", "left", "right", "front", and "rear", and other directional words are described based on the orientation or positional relationship shown in the drawings and should not be understood as limitations to the examples of the present application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It is also to be understood that the directional words such as the upper side, lower side, left side, right side, front side, and rear side not only represent perfect orientations but can also be understood as lateral orientations. For example, the lower side may include directly below, bottom left, bottom right, front bottom, and rear bottom.

In the present application, the terms "controller", "processor", "central processing unit", "central processing unit (CPU)", and "microcontroller unit (MCU)" are interchangeable. When a unit such as the "controller", the "processor", the "central processing unit", the "CPU", or the "MCU" is configured to implement specific functions, these functions may be implemented by a single unit or multiple units mentioned above unless otherwise indicated.

In the present application, the term "device", "module", or "unit" is used for implementing a specific function in the form of hardware or software.

In the present application, the terms "computing", "judging", "controlling", "determining", "identifying", and the like refer to the operations and processes of a computer system or similar electronic computing device (for example, the controller, the processor, or the like).

Power tools to which technical solutions of the present application are applicable include handheld power tools, fastening power tools, cutting power tools, sanding power tools, and the like. For example, the power tools include a blower, an electric drill, an electric circular saw, a reciprocating saw, an impact wrench, an impact screwdriver, and a hammer anvil. Other types of power tools which can adopt the substance of the technical solutions disclosed below may fall within the scope of the present application. The present application mainly concerns cutting tools. A description is performed below by using the reciprocating saw as an example.

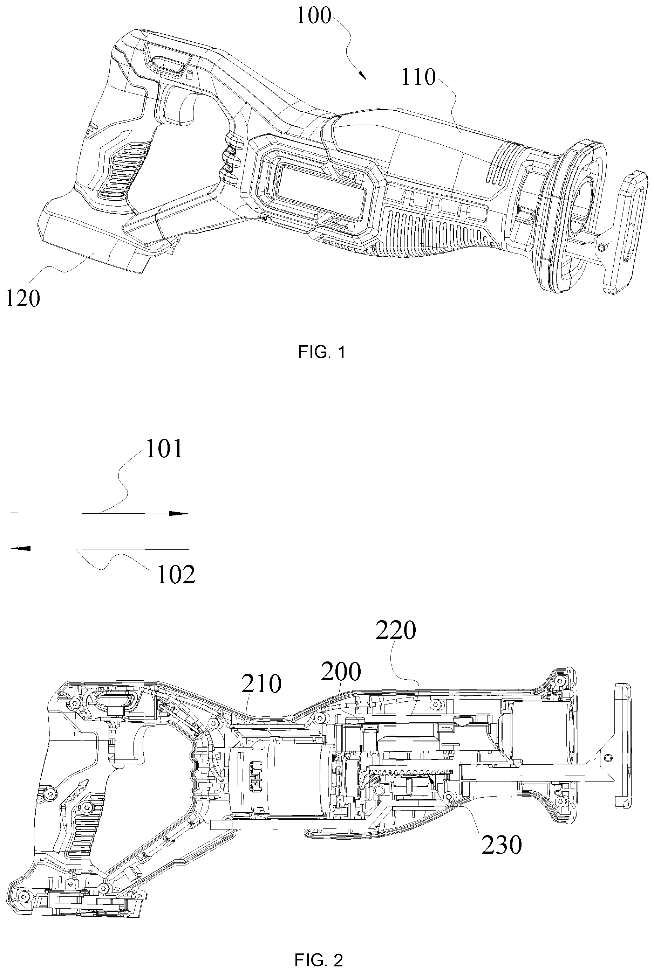

Referring to FIGS. 1 and 2, an example of the present invention provides a reciprocating saw 100. The reciprocating saw 100 includes a housing 110, a battery mounting portion 120, and a functional assembly 200. The battery mounting portion 120 is adaptable to multiple types of battery packs 121. The functional assembly 200 can implement the cutting function of the reciprocating saw 100. The functional assembly 200 includes an electric motor 210, a slide rod 220, and a transmission mechanism 230. The slide rod 220 is used for connecting and driving a saw blade to reciprocate. The electric motor 210 is supported by the housing 110, and a gap or an elastic element exists between the electric motor 210 and the housing 110. The transmission mechanism 230 connects the electric motor 210 to the slide rod 220 and drives the slide rod 220 to reciprocate. When the reciprocating saw 100 runs, the electric motor 210 drives, through the transmission mechanism 230, the slide rod 220 to reciprocate along a first direction 101 and a second direction 102. The multiple types of battery packs 121 may be multiple battery packs with different capacities. In other examples, the multiple types of battery packs may also be multiple battery packs with different nominal voltages.

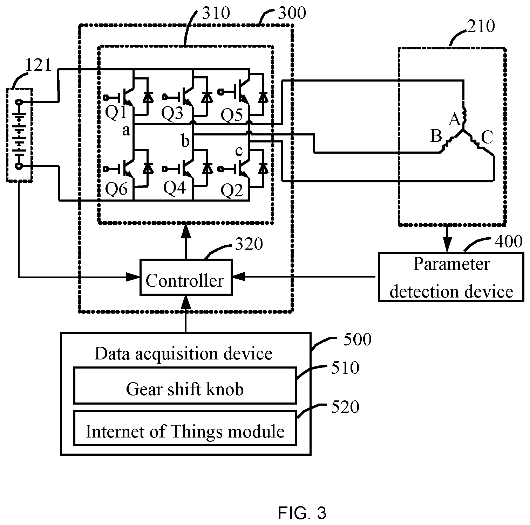

Referring to a circuit block diagram of the reciprocating saw 100 shown in FIG. 3, a driving system of the electric motor 210 may include at least a direct current power supply 121 (that is, a battery pack 121) and a control circuit 300. The control circuit 300 is configured to control the electric motor 210 to run. The control circuit 300 may include a driver circuit 310 and a controller 320.

In this example, the electric motor 210 is a brushless inrunner. In other alternative examples, the electric motor 210 is a brushless outrunner. In this example, the brushless motor is configured to be a three-phase brushless motor. It is to be understood that the electric motor 210 is not limited to the three-phase brushless motor and may be a direct current (DC) motor of another type. The above does not affect the substance of the present application. The electric motor 210 may include at least three-phase stator windings A, B, and C which may adopt a star connection or a delta connection.

The driver circuit 310 is electrically connected to the stator windings A, B, and C of the electric motor 210 and configured to transmit the current from the battery pack 121 to the stator windings A, B, and C to drive the electric motor 210 to rotate. In an example, the driver circuit 310 includes multiple switching elements Q1, Q2, Q3, Q4, Q5, and Q6 which are disposed on a current path from the battery pack 121 to the electric motor 210. Q1, Q3, and Q5 are high-side switching elements, and Q2, Q4, and Q6 are low-side switching elements. Any phase of stator winding of the electric motor 210 is connected to one high-side switching element and one low-side switching element.

A gate terminal of each switching element in the driver circuit 310 is electrically connected to the controller 320 and configured to receive a control signal from the controller 320, where the control signal may be a pulse-width modulation (PWM) signal. The controller 320 may output the control signal to control the switching element in the driver circuit 310 to be turned on, so as to form a freewheeling state. A drain or source of each switching element is connected to the stator winding A, B, or C of the electric motor 210. The switching elements Q1 to Q6 receive control signals from the controller 320 to change their respective on states, thereby changing the current loaded to the stator windings A, B, and C of the electric motor 210 by the battery pack 121. In an example, the driver circuit 310 may be a three-phase bridge driver circuit including six controllable semiconductor power devices (such as field-effect transistors (FETs), bipolar junction transistors (BJTs), or insulated-gate bipolar transistors (IGBTs)). It is to be understood that the preceding switching elements may be any other types of solid-state switches, such as the IGBTs or the BJTs.

As shown in FIG. 3, to drive the electric motor 210 to rotate, the driver circuit 310 has multiple driving states, and in different driving states, the electric motor 210 may have different rotational speeds or different rotation directions.

In some examples, as shown in FIG. 3, the reciprocating saw 100 further includes a parameter detection device 400. The parameter detection device 400 is electrically connected to the electric motor 210 and is electrically or communicatively connected to the controller 320. The parameter detection device 400 can detect one or more running parameters of the electric motor 210 such as a rotational speed of the electric motor, a PWM duty cycle, a voltage, a current, a freewheeling time, and a demagnetization time and transmit the detected running parameters to the controller 320 for reference and application. In some examples, the parameter detection device 400 is electrically connected to the battery pack 121. The parameter detection device 400 can detect parameters such as the electric quantity of the battery pack 121, the capacity of the battery pack 121, a power supply voltage, a power supply current, and a battery pack temperature and can transmit the detected parameters of the battery pack 121 to the controller 320 for reference and application.

In some examples, the controller 320 acquires a parameter of the electric motor 210 and controls, in the case where the parameter of the electric motor 210 exceeds a parameter threshold, the electric motor 210 to rotate on an accelerated basis. That is, the electric motor 210 is controlled to activate an AUTO SENSE function. In some examples, the parameter threshold is determined according to a battery parameter of the battery pack 121. Specifically, the controller 320 acquires the battery parameter of the battery pack 121 and dynamically adjusts the parameter threshold according to the battery parameter of the battery pack 121. The battery parameter includes at least one of an electric quantity and a capacity. The parameter of the electric motor 210 may be different from the parameter threshold. For example, the parameter of the electric motor 210 may be the rotational speed, and the parameter threshold may be the current. The parameter of the electric motor 210 exceeds the parameter threshold, which includes the following: when the parameter of the electric motor 210 is positively correlated with the parameter threshold, the parameter of the electric motor 210 is greater than or equal to the parameter threshold, and when the parameter of the electric motor 210 is negatively correlated with the parameter threshold, the parameter of the electric motor 210 is less than or equal to the parameter threshold.

In some examples, the controller 320 adjusts the parameter threshold, which may refer to that after the battery pack 121 is mounted to the battery mounting portion 120 and before the electric motor 210 starts to run, the parameter detection device 400 acquires the electric quantity and/or capacity of the battery pack 121 and transmits the electric quantity and/or the capacity to the controller 320, and the controller 320 adjusts the parameter threshold according to the received electric quantity and/or capacity of the battery pack 121.

In some examples, the controller 320 adjusts the parameter threshold, which may refer to that in the process where the electric motor 210 runs with no load, the parameter detection device 400 acquires the electric quantity and/or capacity of the battery pack 121 and transmits the electric quantity and/or the capacity to the controller 320, and the controller 320 adjusts the parameter threshold according to the received electric quantity and/or capacity of the battery pack 121.

For the same battery pack 121, the capacity of the battery pack 121 is not changed, and the electric quantity of the battery pack 121 is changed. That is, when the same battery pack 121 is always mounted to the reciprocating saw 100, the capacity of the battery pack 121 is not changed, and the electric quantity of the battery pack 121 is changed. Thus, in this case, the controller 320 adjusts the parameter threshold according to the electric quantity of the battery pack 121. The parameter threshold may be the current or the demagnetization time. When unloaded, the reciprocating saw 100 moves at a low speed constantly. Therefore, the power of the electric motor 210 is constant. In this case, the less the electric quantity of the battery pack, the lower the voltage, and the greater the corresponding output current. Accordingly, the electric quantity of the battery pack is inversely related to the current of the battery pack. Therefore, when the electric quantity of the battery pack 121 is less, the controller 320 controls and adjusts the parameter threshold to be greater. The relationship between the demagnetization time and the electric quantity of the battery pack is the same as the relationship between the current and the electric quantity of the battery pack. The details are not repeated here.

For a different battery pack 121, the capacity of the battery pack 121 is changed. That is, when another battery pack 121 is mounted to the reciprocating saw 100, the capacity of the battery pack 121 is changed. Thus, in this case, the controller 320 adjusts the parameter threshold according to the capacity of the battery pack 121. The parameter threshold may be the current or the demagnetization time. When the reciprocating saw 100 is unloaded, the power of the electric motor 210 is constant, and the battery pack with a large capacity corresponds to a relatively small current. Accordingly, the capacity of the battery pack is inversely related to the current of the battery pack. Therefore, when the capacity of the battery pack 121 is smaller, the controller 320 controls and adjusts the parameter threshold to be greater. The relationship between the demagnetization time and the capacity of the battery pack is the same as the relationship between the current and the capacity of the battery pack. The details are not repeated here.

Therefore, whether for the same battery pack 121, the parameter threshold is adjusted according to the electric quantity of the battery pack 121, or for a different battery pack 121, the parameter threshold is adjusted according to the capacity of the battery pack 121, the parameter threshold is inversely related to the battery parameter of the battery pack 121 substantially.

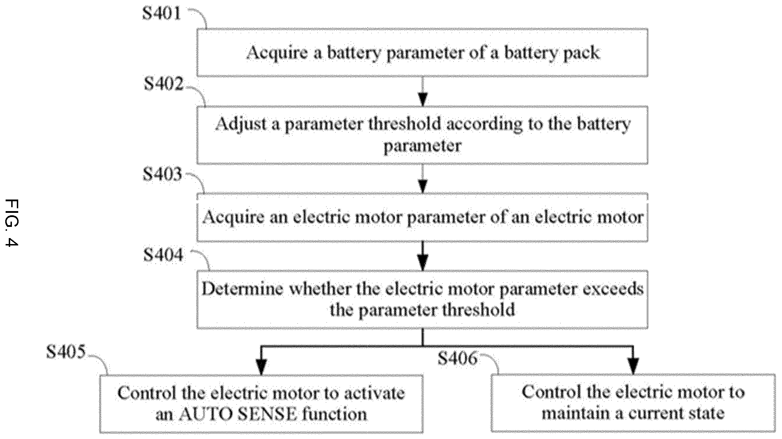

In conjunction with FIG. 4, the controller 320 adjusts the parameter threshold according to the battery parameter of the battery pack 121 and controls the electric motor 210 to activate the AUTO SENSE function, which includes the steps described below.

In S401, the battery parameter of the battery pack is acquired.

After the battery pack 121 is mounted to the battery mounting portion 120, before the electric motor 210 starts to run, or in the process where the electric motor 210 runs with no load, the parameter detection device 400 detects the battery parameter (the electric quantity and/or capacity) of the battery pack 121, and the controller 320 acquires the battery parameter from the parameter detection device 400.

In S402, the parameter threshold is adjusted according to the battery parameter.

After obtaining the battery parameter, the controller 320 adjusts the parameter threshold according to the battery parameter, that is, the current or the demagnetization time is adjusted according to the electric quantity or capacity of the battery pack 121. The process where the parameter threshold is adjusted according to the battery parameter is described above and is not repeated here.

In S403, the electric motor parameter of the electric motor is acquired.

The parameter detection device 400 detects the electric motor parameter of the electric motor 210, specifically the current or demagnetization time of the electric motor 210. The controller 320 acquires the current or demagnetization time of the electric motor 210 from the parameter detection device 400.

In S404, it is determined whether the electric motor parameter exceeds the parameter threshold.

After adjusting the parameter threshold in S402 and obtaining the electric motor parameter of the electric motor 210 in S403, the controller 320 determines whether the electric motor parameter of the electric motor 210 exceeds the parameter threshold. When the electric motor parameter exceeds the parameter threshold, S405 is performed, otherwise, S406 is performed.

In S405, the electric motor is controlled to activate the AUTO SENSE function.

When the electric motor parameter exceeds the parameter threshold, it is indicated that the electric motor 210 is no longer unloaded, that is, the reciprocating saw 100 starts to cut. In this case, the controller 320 controls the electric motor 210 to run on an accelerated basis. That is, the electric motor 210 is controlled to activate the AUTO SENSE function. Parameter thresholds adjusted by the controller 320 according to different battery parameters of the battery pack 121 correspond to different acceleration curves of the electric motor 210 rotating on an accelerated basis. That is, the acceleration curve of the electric motor 210 rotating on an accelerated basis after the electric motor parameter exceeds the parameter threshold adjusted and determined according to the electric quantity of the battery pack 121 is different from the acceleration curve of the electric motor 210 rotating on an accelerated basis after the electric motor parameter exceeds the parameter threshold adjusted and determined according to the capacity of the battery pack 121. A specific magnitude relationship between the two acceleration curves is not limited in the present application.

In S406, the electric motor is controlled to maintain a current state.

When the electric motor parameter does not exceed the parameter threshold, it is indicated that the electric motor 210 is still in the unloaded state. Then, the controller 320 does not need to control the electric motor 210 to run on an accelerated basis and controls the electric motor 210 to maintain a current low-speed running state.

The parameter threshold is adjusted according to the parameters such as the capacity and/or electric quantity of the battery pack 121. Thus, the parameter threshold is adjustable at any time when the reciprocating saw 100 uses a different battery pack 121 or the electric quantity of the battery pack 121 changes during use. Thus, when the reciprocating saw 100 is adapted to the battery pack 121 in different states, the AUTO SENSE function can be activated more stably, thereby improving the stability of an AUTO SENSE determination threshold.

In some examples, as shown in FIG. 3, the reciprocating saw 100 further includes a data acquisition device 500 configured to receive a user input. The data acquisition device 500 is electrically or communicatively connected to the controller 320 and transmits the received user input to the controller 320 for reference and application. Thus, the controller 320 may adjust the parameter threshold according to the user input and the battery parameter of the battery pack 121.

In some examples, the controller 320 adjusts the parameter threshold according to the user input, which may refer to that before the electric motor 210 starts to run, the data acquisition device 500 receives the user input and transmits the user input to the controller 320, and the controller 320 adjusts the parameter threshold according to the received user input.

In some examples, the controller 320 adjusts the parameter threshold according to the user input, which may refer to that in the process where the electric motor 210 runs with no load, the data acquisition device 500 receives the user input and transmits the user input to the controller 320, and the controller 320 adjusts the parameter threshold according to the received user input.

In some examples, the user input corresponds to different materials to be cut by the reciprocating saw 100. Optionally, the data acquisition device 500 has at least two gear selection modes, and different gear selection modes correspond to different cutting materials. Optionally, the gear selection modes may include a first gear and a second gear. The first gear corresponds to wood, and the second gear corresponds to metal. Optionally, when the gear selection modes include the first gear and the second gear, the first gear may correspond to wood and another material, and the second gear corresponds to metal. The present application does not limit the number of cutting materials corresponding to each gear. Optionally, the gear selection modes may include the first gear, the second gear, and a third gear. The first gear corresponds to wood, the second gear corresponds to metal, and the third gear corresponds to another material. In addition, the gear selection modes may further include other gears, which is not limited in the present application. Moreover, the cutting material corresponding to each gear is not limited in the present application.

In some examples, the data acquisition device 500 includes a gear shift knob 510, and the user selects, through the gear shift knob 510, the gear corresponding to the material to be cut. That is, after the user rotates the gear shift knob 510, the data acquisition device 500 obtains the gear selected by the user and transmits the gear to the controller 320 for reference and application. Optionally, the gear shift knob 510 may be a knob that independently controls the gear corresponding to the cutting material. Optionally, a knob on the reciprocating saw 100 may also serve as the gear shift knob 510.

In some examples, the data acquisition device 500 includes an Internet of Things module 520, and the Internet of Things module 520 is configured to perform wireless communication with an external terminal to acquire a user input sent by the external terminal. That is, the user selects, through the external terminal, the gear corresponding to the material to be cut. Then, the gear is transmitted to the Internet of Things module 520, and the data acquisition device 500 obtains the gear selected by the user. Optionally, the external terminal may be a remote control. Optionally, the external terminal may be a mobile phone. In addition, the external terminal may be any device that can implement gear selection, which is not limited in the present application.

In some examples, after the controller 320 adjusts the parameter threshold according to the user input, the controller 320 acquires the parameter of the electric motor 210. In addition, in the case where the parameter of the electric motor 210 exceeds the parameter threshold, the electric motor 210 is controlled to rotate on an accelerated basis, that is, the electric motor 210 is controlled to activate the AUTO SENSE function. The parameter threshold may be the current, a field weakening time, or another parameter, which is not limited in the present application.

In some examples, after the electric motor 210 works in a gear corresponding to the data acquisition device 500, the controller 320 is configured not to respond to the user input. That is, in a cutting process of the reciprocating saw 100, the user switches the gear again, and the controller 320 does not adjust the parameter threshold according to the user input and does not control the rotational speed of the electric motor 210.

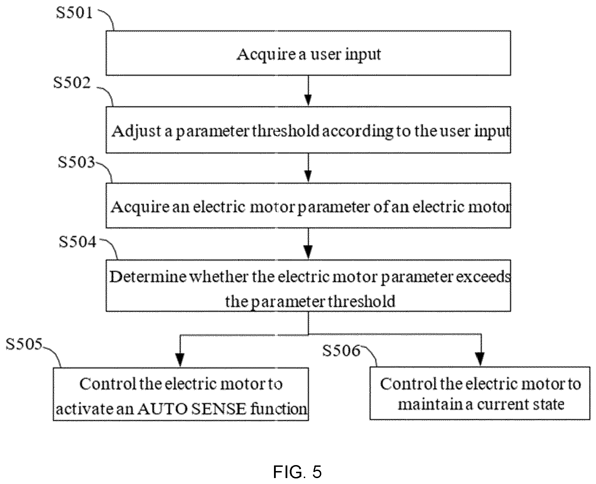

In conjunction with FIG. 5, the controller 320 adjusts the parameter threshold according to the user input and controls the electric motor 210 to activate the AUTO SENSE function, which includes the steps described below.

In S501, the user input is acquired.

Before the electric motor 210 starts to run or in the process where the electric motor 210 runs with no load, the data acquisition device 500 acquires the user input (the gear corresponding to the cut material), and the controller 320 acquires the user input from the data acquisition device 500.

In S502, the parameter threshold is adjusted according to the user input.

After obtaining the user input, the controller 320 adjusts the parameter threshold according to the user input.

In S503, the electric motor parameter of the electric motor is acquired.

The parameter detection device 400 detects the electric motor parameter of the electric motor 210, and the controller 320 acquires the electric motor parameter of the electric motor 210 from the parameter detection device 400.

In S504, it is determined whether the electric motor parameter exceeds the parameter threshold.

After adjusting the parameter threshold in S502 and obtaining the electric motor parameter of the electric motor 210 in S503, the controller 320 determines whether the electric motor parameter of the electric motor 210 exceeds the parameter threshold. When the electric motor parameter exceeds the parameter threshold, S505 is performed, otherwise, S506 is performed.

In S505, the electric motor is controlled to activate the AUTO SENSE function.

When the electric motor parameter exceeds the parameter threshold, it is indicated that the electric motor 210 is no longer unloaded. In this case, the controller 320 controls the electric motor 210 to run on an accelerated basis and activate the AUTO SENSE function. Speed change curves of the electric motor 210 rotating on an accelerated basis in different gears are different. That is, for different cutting materials, the acceleration and/or acceleration response time of the electric motor 210 are different.

In S506, the electric motor is controlled to maintain the current state.

When the electric motor parameter does not exceed the parameter threshold, it is indicated that the electric motor 210 is still in the unloaded state, and the controller 320 controls the electric motor 210 to maintain the current low-speed running state.

The parameter threshold is adjusted based on the user input (corresponding to different materials) so that the parameter threshold is adjustable at any time when various materials are cut by the reciprocating saw 100. Thus, when the reciprocating saw 100 cuts different materials, the AUTO SENSE function can be activated more stably, thereby improving the stability of the AUTO SENSE determination threshold.

As according to the invention, the controller 320 acquires a running parameter of the electric motor 210 in an unloaded running phase and updates the parameter threshold according to the running parameter. When the electric motor 210 is in the unloaded running phase, the electric motor parameter of the electric motor 210 does not exceed the parameter threshold. After the electric motor 210 runs at a constant low speed for a certain duration, the controller 320 determines that the electric motor 210 is in the unloaded running phase. Then, the controller 320 acquires the parameter of the electric motor 210 again and controls, in the case where the parameter of the electric motor 210 exceeds the parameter threshold, the electric motor 210 to rotate on an accelerated basis. That is, the electric motor 210 is controlled to activate the AUTO SENSE function. The electric motor parameter of the electric motor 210 includes the current or the demagnetization time during current commutation.

In some examples, the running parameter of the electric motor 210 in the unloaded running phase includes the demagnetization time. After the reciprocating saw 100 is powered on, the controller 320 controls, in response to a power-on signal, the electric motor 210 to rotate at a first rotational speed constantly. In addition, the controller 320 acquires the demagnetization time generated by the commutation of the electric motor 210 in the process where the electric motor 210 runs at the first rotational speed, thereby updating the parameter threshold according to the demagnetization time. The first rotational speed is relatively low. Optionally, in the process where the electric motor 210 runs at the first rotational speed, the controller 320 may further acquire the demagnetization time generated by the commutation of the electric motor 210 in at least one period and determine the average value of the demagnetization time in the at least one period, thereby updating the parameter threshold according to the average value of the demagnetization time.

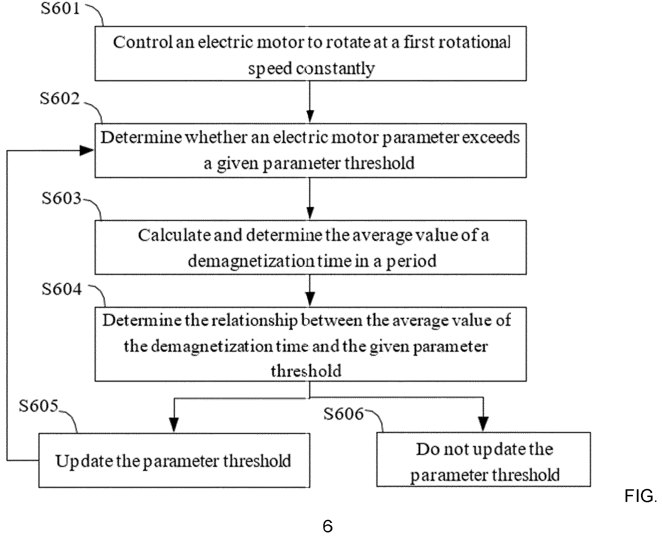

In conjunction with FIG. 6, a specific description is performed in the present application by using the example where the controller 320 updates the parameter threshold according to the average value of the demagnetization time and controls the electric motor 210 to activate the AUTO SENSE function. The steps are as follows.

In S601, the electric motor is controlled to rotate at the first rotational speed constantly.

After the reciprocating saw 100 is powered on, the controller 320 controls, in response to the power-on signal, the electric motor 210 to rotate at the first rotational speed constantly. That is, the electric motor 210 is controlled to rotate at the constant low speed.

In S602, it is determined whether the electric motor parameter exceeds a given parameter threshold.

In the process where the electric motor 210 rotates at the constant low speed, the controller 320 determines whether the electric motor parameter of the electric motor 210 exceeds the given parameter threshold V. The given parameter threshold V is set according to empirical values. Optionally, the given parameter threshold V may be the average value of the demagnetization time of the electric motor 210 in a period.

When the electric motor parameter exceeds the given parameter threshold V, the controller 320 controls the electric motor 210 to rotate on an accelerated basis and activate the AUTO SENSE function. When the electric motor parameter does not exceed the given parameter threshold V, the controller 320 determines that the electric motor 210 is in an unloaded running state, and S603 is performed.

In S603, the average value of the demagnetization time in the period is calculated and determined.

After the controller 320 determines that the electric motor 210 is in the unloaded running state, the controller 320 acquires the demagnetization time generated by the commutation of the electric motor 210 in the at least one period and calculates and determines the average value of the demagnetization time in the at least one period.

In S604, the relationship between the average value of the demagnetization time and the given parameter threshold is determined.

After calculating and determining the average value of the demagnetization time, the controller 320 compares the calculated average value of the demagnetization time with the given parameter threshold V to determine whether the two are the same.

When the difference between the two is within an error range, step S606 is performed. When the difference between the two is greater than the error range, step S605 is performed. The error range is set according to empirical values.

In S605, the parameter threshold is updated.

When the difference between the calculated average value of the demagnetization time and the given parameter threshold V is greater than the error range, it is considered that it is unsuitable to use the given parameter threshold V as a parameter threshold for determination again. The controller 320 replaces the given parameter threshold V with the updated parameter threshold. The given parameter threshold V is updated to the updated parameter threshold. That is, the parameter threshold in this case is used as the given parameter threshold V in S602 and is to be used in the subsequent process where the parameter threshold is updated.

Then, step S602 is performed again, where the parameter threshold in this case is used as the criterion for determining whether the electric motor 210 activates the AUTO SENSE function. When the electric motor parameter of the electric motor 210 exceeds the parameter threshold, the controller 320 controls the electric motor 210 to activate the AUTO SENSE function. Otherwise, the steps following S602 are performed continuously.

In S606, the parameter threshold is not updated.

When the difference between the calculated average value of the demagnetization time and the given parameter threshold V is within the error range, the given parameter threshold V is still used as the parameter threshold for determination, and the controller 320 does not update the parameter threshold.

Therefore, if the parameter threshold is updated, the updated parameter threshold is used as the given parameter threshold V, and if the parameter threshold is not updated, the given parameter threshold V remains unchanged. In this manner, S601 to S606 are repeatedly performed to update/not update the parameter threshold, which is used as the criterion for subsequently determining whether the electric motor 210 activates the AUTO SENSE function.

In some examples, when the difference between the calculated average value of the demagnetization time and the given parameter threshold V is greater than the error range, the calculated average value of the demagnetization time is used as the parameter threshold V for the next cyclic determination and is not used for this cyclic determination.

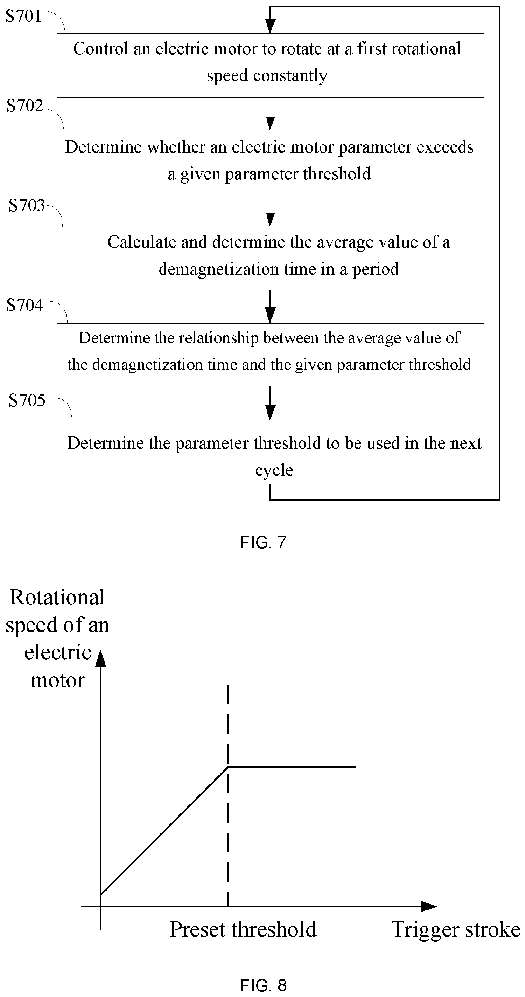

In conjunction with FIG. 7, a specific description is performed in the present application by using the process where the controller 320 updates the parameter threshold according to the average value of the demagnetization time as an example. Another implementation in which the controller 320 updates the parameter threshold according to the average value of the demagnetization time and controls the electric motor 210 to activate the AUTO SENSE function includes the steps described below.

In S701, the electric motor is controlled to rotate at the first rotational speed constantly.

S701 is the same as S601. The details are not repeated here.

In S702, it is determined whether the electric motor parameter exceeds the given parameter threshold.

S702 is the same as S602. The details are not repeated here.

In S703, the average value of the demagnetization time in the period is calculated and determined.

S703 is the same as S603. The details are not repeated here.

In S704, the relationship between the average value of the demagnetization time and the given parameter threshold is determined.

S704 is the same as S604. The details are not repeated here.

In S705, the parameter threshold to be used in the next cycle is determined.

When the difference between the calculated average value of the demagnetization time and the given parameter threshold V is greater than the error range, the controller 320 uses the updated parameter threshold as the parameter threshold used in the next cycle, that is, the given parameter threshold. When the difference between the calculated average value of the demagnetization time and the given parameter threshold V is within the error range, the given parameter threshold V is still used as the parameter threshold to be used in the next cycle.

The relationship between the electric motor parameter and the given parameter threshold has been determined in S702 in this cycle, and the updated parameter threshold is not used in this cycle. Therefore, it is unnecessary to determine the relationship between the electric motor parameter and the parameter threshold again.

The parameter threshold is updated according to the actual working state of the electric motor of the power tool. Thus, the case is avoided where different power tools have different sensitivities for activating the AUTO SENSE function due to some objective factors (such as storage time and the degree to which lubricant is applied). The parameter threshold is automatically updated so that the different power tools can activate the AUTO SENSE function by using relatively appropriate parameter thresholds, thereby improving user experience.

In some examples, at least two of the preceding methods of adjusting the parameter threshold according to the battery parameter, adjusting the parameter threshold according to the user input, and updating the parameter threshold according to the running parameter of the electric motor in the unloaded running phase may coexist. That is, in addition to the three methods of adjusting the parameter threshold separately, there are four combined methods of adjusting the parameter threshold. Optionally, when the method of adjusting the parameter threshold according to the battery parameter and the method of adjusting the parameter threshold according to the user input coexist, the parameter threshold may be adjusted according to the user input, and then the parameter threshold may be adjusted according to the battery parameter. Alternatively, the importance of the two may be used as a basis, and one of the two with higher importance is used as the criterion for preferentially adjusting the parameter threshold. Optionally, when the parameter threshold is adjusted according to the three, the parameter threshold may be first updated according to the running parameter of the electric motor in the unloaded running phase, then the parameter threshold may be adjusted according to the user input, and finally, the parameter threshold may be adjusted according to the battery parameter. Alternatively, the importance of the three may be used as a basis, and one of the three with higher importance is used as the criterion for preferentially adjusting the parameter threshold.

According to the invention, improve the precision with which the electric motor 210 is controlled to activate the AUTO SENSE function, the controller 320 acquires the running parameter of the electric motor 210 in the unloaded running phase. In addition, when the running parameter exceeds the parameter threshold N times consecutively, the controller 320 controls the electric motor 210 to activate the AUTO SENSE function. Optionally, the running parameter of the electric motor 210 in the unloaded running phase may be the demagnetization time. Optionally, the running parameter of the electric motor 210 in the unloaded running phase may be the product of the demagnetization time and the voltage. Additionally, other running parameters of the electric motor 210 may be used, and the present application does not impose a limitation in this respect.

Optionally, N may be 40. That is, when the controller 320 acquires the running parameter of the electric motor 210 in the unloaded running phase 40 times consecutively. When each of the running parameters acquired 40 times consecutively exceeds the parameter threshold, it is determined that the reciprocating saw 100 starts to cut, and the controller 320 controls the electric motor 210 to activate the AUTO SENSE function. Optionally, N may be 35. Optionally, N may be 50. Optionally, N may be 57. Optionally, N may be 68. Optionally, N may be a positive integer that is determined according to empirical values and is much greater than 1, which is not limited in the present application.

In some examples, the controller 320 controls the electric motor 210 to activate the AUTO SENSE function. When the electric motor 210 is controlled to run at a relatively high rotational speed, the controller 320 controls the specific rotational speed of the electric motor 210 based on an operation performed on the reciprocating saw 100 by the user.

In some examples, the operation performed on the reciprocating saw 100 by the user may be pressing a trigger. As shown in FIG. 8, when a trigger stroke is shorter than a preset threshold, that is, when the degree to which the trigger is pressed by the user is less than the preset threshold, the rotational speed of the electric motor 210 is proportional to the trigger stroke. The longer the trigger stroke, the higher the rotational speed of the electric motor 210. When the trigger stroke is longer than or equal to the preset threshold, the controller 320 controls the electric motor 210 to rotate at a fixed higher rotational speed. The preset threshold is set according to empirical values. Optionally, the preset threshold may be three quarters. Optionally, the preset threshold may be another value and is not limited in the present application.

In some examples, the operation performed on the reciprocating saw 100 by the user may be rotating a knob. When the angle by which the knob is rotated is smaller than the preset threshold, the rotational speed of the electric motor 210 is proportional to the angle by which the knob is rotated. When the angle by which the knob is rotated is larger than or equal to the preset threshold, the controller 320 controls the electric motor 210 to rotate at a fixed higher rotational speed. In addition, the operation performed on the reciprocating saw 100 by the user may be another operation, which is not limited in the present application.

In some examples, when the reciprocating saw 100 does not cut, the electric motor 210 returns to the unloaded state again. In this case, the electric motor 210 still runs at the high rotational speed. It is difficult for the user to hold and control the reciprocating saw 100. Moreover, the machine is noisy and worn a lot, which affects the service life. To avoid this situation, the controller 320 needs to control the electric motor 210 to reduce the rotational speed when the electric motor 210 returns to the unloaded state again.

In some examples, the controller 320 acquires the electric motor parameter of the electric motor 210 M times consecutively. When the electric motor parameter of the electric motor 210 meets a preset condition M times consecutively, the controller 320 controls the electric motor 210 to reduce the rotational speed. M is a positive integer that is determined according to empirical values and is much greater than 1, which is not limited in the present application.

Optionally, the electric motor parameter meets the preset condition, which includes the following: the rotational speed of the electric motor 210 is higher than a rotational speed threshold. When the reciprocating saw 100 does not cut, the cutting member of the reciprocating saw 100 is no longer subjected to resistance from the material to be cut. Then, the rotational speed of the electric motor 210 increases. The rotational speed threshold is determined according to empirical values.

Optionally, the electric motor parameter meets the preset condition, which includes the following: the difference between rotational speeds of the electric motor 210 is greater than a threshold for the difference between rotational speeds. When the reciprocating saw 100 does not cut, the rotational speed of the electric motor 210 increases. Then, in this case, a difference exists between the rotational speed of the electric motor 210 and the rotational speed of the electric motor 210 in a loaded state. The threshold for the difference between rotational speeds is determined according to empirical values.

Optionally, the electric motor parameter meets the preset condition, which includes the following: the product of the demagnetization time of the electric motor 210 and the voltage of the electric motor 210 does not exceed the parameter threshold. When the product of the demagnetization time of the electric motor 210 and the voltage of the electric motor 210 exceeds the parameter threshold M times consecutively, the electric motor 210 activates the AUTO SENSE function, and the rotational speed of the electric motor 210 increases. Correspondingly, when the product of the demagnetization time of the electric motor 210 and the voltage of the electric motor 210 does not exceed the parameter threshold M times consecutively, the controller 320 determines that the electric motor 210 is unloaded and controls the electric motor 210 to reduce the rotational speed.

The basic principles, main features, and advantages of the present application are shown and described above. It is to be understood by those skilled in the art that the preceding examples do not limit the present application in any form, and any technical solutions obtained through equivalent substitutions or equivalent transformations are within the scope of the claims.

## Claims

1. A power tool (100), comprising:
an electric motor (210);
a battery mounting portion (120) adaptable to a plurality of types of battery packs (121); and
a control circuit (300) configured to control the electric motor to run and comprising a controller (320) configured to, in a case where an electric motor parameter of the electric motor exceeds a parameter threshold, control the electric motor to rotate on an accelerated basis;
wherein the controller is configured to:
acquire a battery parameter of a battery pack among the plurality of types of battery packs; and
adjust the parameter threshold according to the battery parameter;
**characterized in that**
the power tool further comprises a parameter detection device (400), wherein the parameter detection device is electrically connected to the battery pack and is configured to detect the battery parameter of the battery pack and transmit the battery parameter to the controller;
wherein the parameter detection device is further configured to detect a running parameter of the electric motor and transmit the running parameter of the electric motor to the controller;
wherein the controller is configured to adjust the parameter threshold to an updated parameter threshold according to a running parameter of the electric motor in a phase where the electric motor runs with no load.

2. The power tool according to claim 1, wherein the battery parameter comprises at least one of an electric quantity and a capacity.

3. The power tool according to claim 1, wherein parameter thresholds adjusted according to different battery parameters correspond to different acceleration curves of the electric motor rotating on an accelerated basis.

4. The power tool according to claim 1, wherein the controller is configured to, before the electric motor starts to run, adjust the parameter threshold according to the battery parameter.

5. The power tool according to claim 1, wherein the controller is configured to adjust the parameter threshold according to the battery parameter at least in a process where the electric motor runs with no load.

6. The power tool according to claim 1, further comprising a data acquisition device (500) configured to receive a user input, wherein the controller is configured to adjust the parameter threshold according to the user input and/or the battery parameter.

7. The power tool according to claim 6, wherein the data acquisition device has at least two gear selection modes.

8. The power tool according to claim 1, wherein the electric motor parameter comprises a current or a demagnetization time during commutation of the electric motor.

9. The power tool according to claim 1, wherein the parameter threshold is inversely related to the battery parameter substantially.

10. The power tool according to claim 1, wherein the controller is configured to control, in response to a power-on signal, the electric motor to rotate at a first rotational speed constantly.

11. The power tool according to claim 1, wherein the controller is further configured to adjust the parameter threshold to the updated parameter threshold according to the battery parameter.

12. The power tool according to claim 1 or 11, wherein the controller replaces a historical parameter threshold with the updated parameter threshold.

13. The power tool according to claim 1 or 11, wherein the controller is configured to, in a case where the electric motor parameter exceeds the updated parameter threshold, control the electric motor to rotate on an accelerated basis.

## Patentansprüche

1. Ein Elektrowerkzeug (100), umfassend:
einen Elektromotor (210);
einen Batteriemontageabschnitt (120), der an eine Mehrzahl von Typen von Akkupacks (121) anpassbar ist; und
eine Steuerschaltung (300), die dazu ausgebildet ist, den Elektromotor so zu steuern, dass er läuft, und die eine Steuereinrichtung (320) umfasst, die dazu ausgebildet ist, in einem Fall, in dem ein Elektromotorparameter des Elektromotors einen Parameterschwellenwert überschreitet, den Elektromotor so zu steuern, dass er in beschleunigter Weise rotiert;
wobei die Steuereinrichtung dazu ausgebildet ist:
einen Batterieparameter eines Akkupacks unter der Mehrzahl von Typen von Akkupacks zu erfassen; und
den Parameterschwellenwert gemäß dem Batterieparameter anzupassen;
**dadurch gekennzeichnet, dass**
das Elektrowerkzeug ferner eine Parameterdetektionseinrichtung (400) umfasst, wobei die Parameterdetektionseinrichtung elektrisch mit dem Akkupack verbunden ist und dazu ausgebildet ist, den Batterieparameter des Akkupacks zu detektieren und den Batterieparameter an die Steuereinrichtung zu übertragen;
wobei die Parameterdetektionseinrichtung ferner dazu ausgebildet ist, einen Laufparameter des Elektromotors zu detektieren und den Laufparameter des Elektromotors an die Steuereinrichtung zu übertragen;
wobei die Steuereinrichtung dazu ausgebildet ist, den Parameterschwellenwert gemäß einem Laufparameter des Elektromotors in einer Phase, in der der Elektromotor ohne Last läuft, auf einen aktualisierten Parameterschwellenwert anzupassen.

2. Das Elektrowerkzeug nach Anspruch 1, wobei der Batterieparameter mindestens eines von einer elektrischen Größe und einer Kapazität umfasst.

3. Das Elektrowerkzeug nach Anspruch 1, wobei gemäß unterschiedlichen Batterieparametern angepasste Parameterschwellenwerte unterschiedlichen Beschleunigungskurven des Elektromotors entsprechen, der in beschleunigter Weise rotiert.

4. Das Elektrowerkzeug nach Anspruch 1, wobei die Steuereinrichtung dazu ausgebildet ist, vor dem Beginn des Laufens des Elektromotors den Parameterschwellenwert gemäß dem Batterieparameter anzupassen.

5. Das Elektrowerkzeug nach Anspruch 1, wobei die Steuereinrichtung dazu ausgebildet ist, den Parameterschwellenwert mindestens in einem Prozess, in dem der Elektromotor ohne Last läuft, gemäß dem Batterieparameter anzupassen.

6. Das Elektrowerkzeug nach Anspruch 1, ferner umfassend eine Datenerfassungseinrichtung (500), die dazu ausgebildet ist, eine Benutzereingabe zu empfangen, wobei die Steuereinrichtung dazu ausgebildet ist, den Parameterschwellenwert gemäß der Benutzereingabe und/oder dem Batterieparameter anzupassen.

7. Das Elektrowerkzeug nach Anspruch 6, wobei die Datenerfassungseinrichtung mindestens zwei Gangwahlmodi aufweist.

8. Das Elektrowerkzeug nach Anspruch 1, wobei der Elektromotorparameter einen Strom oder eine Entmagnetisierungszeit während der Kommutierung des Elektromotors umfasst.

9. Das Elektrowerkzeug nach Anspruch 1, wobei der Parameterschwellenwert im Wesentlichen umgekehrt zu dem Batterieparameter in Beziehung steht.

10. Das Elektrowerkzeug nach Anspruch 1, wobei die Steuereinrichtung dazu ausgebildet ist, als Reaktion auf ein Einschalt-Signal den Elektromotor so zu steuern, dass er konstant mit einer ersten Drehzahl rotiert.

11. Das Elektrowerkzeug nach Anspruch 1, wobei die Steuereinrichtung ferner dazu ausgebildet ist, den Parameterschwellenwert gemäß dem Batterieparameter auf den aktualisierten Parameterschwellenwert anzupassen.

12. Das Elektrowerkzeug nach Anspruch 1 oder 11, wobei die Steuereinrichtung einen historischen Parameterschwellenwert durch den aktualisierten Parameterschwellenwert ersetzt.

13. Das Elektrowerkzeug nach Anspruch 1 oder 11, wobei die Steuereinrichtung dazu ausgebildet ist, in einem Fall, in dem der Elektromotorparameter den aktualisierten Parameterschwellenwert überschreitet, den Elektromotor so zu steuern, dass er in beschleunigter Weise rotiert.

## Revendications

1. Un outil électrique (100), comprenant :
un moteur électrique (210) ;
une portion de montage de batterie (120) adaptable à une pluralité de types de blocs-batteries (121) ; et
un circuit de commande (300) configuré pour commander le moteur électrique de sorte qu'il fonctionne et comprenant une unité de commande (320) configurée pour, dans un cas où un paramètre du moteur électrique du moteur électrique dépasse un seuil de paramètre, commander le moteur électrique de sorte qu'il tourne de manière accélérée ;
dans lequel l'unité de commande est configurée pour :
acquérir un paramètre de batterie d'un bloc-batterie parmi la pluralité de types de blocs-batteries ; et
ajuster le seuil de paramètre selon le paramètre de batterie ;
**caractérisé en ce que**
l'outil électrique comprend en outre un dispositif de détection de paramètre (400), dans lequel le dispositif de détection de paramètre est électriquement connecté au bloc-batterie et est configuré pour détecter le paramètre de batterie du bloc-batterie et transmettre le paramètre de batterie à l'unité de commande ;
dans lequel le dispositif de détection de paramètre est en outre configuré pour détecter un paramètre de fonctionnement du moteur électrique et transmettre le paramètre de fonctionnement du moteur électrique à l'unité de commande ;
dans lequel l'unité de commande est configurée pour ajuster le seuil de paramètre à un seuil de paramètre mis à jour selon un paramètre de fonctionnement du moteur électrique dans une phase où le moteur électrique fonctionne à vide.

2. L'outil électrique selon la revendication 1, dans lequel le paramètre de batterie comprend au moins l'un parmi une quantité électrique et une capacité.

3. L'outil électrique selon la revendication 1, dans lequel des seuils de paramètre ajustés selon différents paramètres de batterie correspondent à différentes courbes d'accélération du moteur électrique tournant de manière accélérée.

4. L'outil électrique selon la revendication 1, dans lequel l'unité de commande est configurée pour, avant que le moteur électrique commence à fonctionner, ajuster le seuil de paramètre selon le paramètre de batterie.

5. L'outil électrique selon la revendication 1, dans lequel l'unité de commande est configurée pour ajuster le seuil de paramètre selon le paramètre de batterie au moins dans un processus où le moteur électrique fonctionne à vide.

6. L'outil électrique selon la revendication 1, comprenant en outre un dispositif d'acquisition de données (500) configuré pour recevoir une entrée utilisateur, dans lequel l'unité de commande est configurée pour ajuster le seuil de paramètre selon l'entrée utilisateur et/ou le paramètre de batterie.

7. L'outil électrique selon la revendication 6, dans lequel le dispositif d'acquisition de données a au moins deux modes de sélection de vitesse.

8. L'outil électrique selon la revendication 1, dans lequel le paramètre du moteur électrique comprend un courant ou un temps de démagnétisation pendant la commutation du moteur électrique.

9. L'outil électrique selon la revendication 1, dans lequel le seuil de paramètre est sensiblement en relation inverse avec le paramètre de batterie.

10. L'outil électrique selon la revendication 1, dans lequel l'unité de commande est configurée pour commander, en réponse à un signal de mise sous tension, le moteur électrique de sorte qu'il tourne constamment à une première vitesse de rotation.

11. L'outil électrique selon la revendication 1, dans lequel l'unité de commande est en outre configurée pour ajuster le seuil de paramètre au seuil de paramètre mis à jour selon le paramètre de batterie.

12. L'outil électrique selon la revendication 1 ou 11, dans lequel l'unité de commande remplace un seuil de paramètre historique par le seuil de paramètre mis à jour.

13. L'outil électrique selon la revendication 1 ou 11, dans lequel l'unité de commande est configurée pour, dans un cas où le paramètre du moteur électrique dépasse le seuil de paramètre mis à jour, commander le moteur électrique de sorte qu'il tourne de manière accélérée.
